# EUROPEAN PATENT APPLICATION

(11) **EP 4 517 868 A1**
(43) Date of publication of application: **05.03.2025**
(21) Application number: 22939737.7
(22) Date of filing: 08.09.2022
(51) Int. Cl.: H01M 4/36

(54) **POSITIVE ELECTRODE MATERIAL WITH LOW WATER CONTENT AND PREPARATION METHOD THEREFOR, AND LITHIUM-ION BATTERY**

(30) Priority: 29.04.2022 CN 202210472447
(71) Applicant: Shenzhen Dynanonic Co., Ltd., Shenzhen, Guangdong 518000 (CN); Foshan Dynanonic Technology Co., Ltd., Foshan, Guangdong 528500 (CN)
(72) Inventor: XU, Rongyi, Shenzhen, Guangdong 518000 (CN); LI, Hengli, Shenzhen, Guangdong 518000 (CN); KONG, Lingyong, Shenzhen, Guangdong 518000 (CN); LI, Yineng, Shenzhen, Guangdong 518000 (CN); CHEN, Yanyu, Shenzhen, Guangdong 518000 (CN); LIU, Qifeng, Shenzhen, Guangdong 518000 (CN)
(74) Representative: Patentwerk B.V.
(86) International application number: PCT/CN2022/117856
(87) International publication number: WO 2023/206911

(57) **Abstract**

A low water content cathode material, a preparation method thereof, and a lithium-ion battery are provided. The low water content cathode material includes: a cathode material core, and an outer film layer being coated outside the cathode material core, in which, the outer film layer includes at least one carbon-based layer formed by an oxygen-free carbon source. **In** the preparation method, by coating a cathode material precursor with an oxygen-free carbon source, a resulting cathode material itself has a water content of 600 ppm or below and has the function of a protective film, such that the cathode material has low water absorption when exposed to a humid environment, and can improve the safety performance of a lithium-ion battery.

## Description

### TECHNICAL FIELD

Embodiments of the present application relate to the technical field of a cathode material, such as the technical field of a cathode material for a lithium-ion battery, and more particularly to a low water content cathode material, a preparation method thereof, and a lithium-ion battery.

### BACKGROUND

A battery electrode plate with a higher water content (more than 0.6‰) has more water diffusing into an electrolyte to react with a lithium salt in the electrolyte to produce extremely corrosive HF, destroying a structure of the lithium-ion battery and causing a battery capacity decay. Especially during the charging and discharging process, the higher the HF content, the faster the battery decays.

Therefore, the presence of high water content in the battery not only causes the decomposition of lithium salts in the electrolyte, but also causes certain corrosion and damage to the cathode and anode materials and current collectors, and also leads to a reduction in the cycle performance and safety performance of the battery.

Most of cathode materials of the lithium-ion batteries on the market have initial water contents of above 1,000 ppm, which imposes highly requirements on the subsequent drying process. Currently, studies on the hydrophobization of the cathode materials of the lithium-ion batteries are very few, and most of these studies focus on the mechanisms of water's influence on material structure and electrochemical properties and the studies of later dehydration processes.

### SUMMARY

The following is a summary of the subjects described in detail in the present application. This summary is not intended to limit the scope of the claims.

Embodiments of the present application provide a low water content cathode material, a preparation method thereof, and a lithium-ion battery. In the low water content cathode material, at least one carbon-based layer formed from an oxygen-free carbon source is coated outside the cathode material core, which can effectively control the water content of battery cathode material to be smaller than 600 ppm, and have the advantages of low cost and high electrochemical performance.

In a first aspect, embodiments of the present application provide a low water content cathode material, the cathode material comprising: a cathode material core, and an outer film layer being coated outside the cathode material core. The outer film layer comprises at least one carbon-based layer formed from an oxygen-free carbon source.

The low water content cathode material provided in the first aspect of the present application not only has low water content, which is smaller than 600 ppm, but also has low water absorption when exposed to a humid environment, and moreover, when being used in batteries, the safety performance is significantly improved and the cycle performance of the battery is improved..

The oxygen-free carbon source in the present application means that the molecular structure of the carbon source does not contain oxygen.

Preferably, the cathode material core comprises any one of or a combination of at least two of: lithium cobaltate, lithium nickelate, lithium manganate, lithium ferrous silicate, lithium manganese phosphate, lithium manganese iron phosphate and lithium iron phosphate.

Preferably, the carbon-based layer contains C-F bonds. It is preferred that the carbon-based layer contains the C-F bonds, thus having better hydrophobic performance. Not only does the cathode material coated with the carbon-based layer have a lower water content, but also such cathode material can maintain a lower water content for a longer period of time.

Preferably, a molar ratio of F/C in the carbon-based layer is 0.5 to 0.8:1, for example, the molar ratio can be 0.5:1, 0.55:1, 0.6:1, 0.65:1, 0.7:1, 0.75:1, or 0.8 :1, etc., but is not limited to the listed values. Other unlisted values within this range are also applicable.

In the present application, by controlling the molar ratio of F/C in the carbon-based layer to be 0.5 to 0.8:1, it is ensured that the C-F bond content improves the hydrophobic performance while avoiding the problem of electrical performance degradation caused by the bonding of two or more fluorine atoms onto each carbon atom.

Preferably, a thickness of the carbon-based layer is 2 nm to 3 nm, for example, the thickness can be 2 nm, 2.1 nm, 2.2 nm, 2.3 nm, 2.4 nm, 2.5 nm, 2.6 nm, 2.7 nm, 2.8 nm, 2.9 nm, or 3.0 nm, etc., but not limited to the listed values, other unlisted values within this range are also applicable.

In the present application, the thickness of the carbon-based layer is controlled to be 2 nm to 3 nm, which on the one hand can ensure uniform and effective coating of the cathode material core, and on the other hand can avoid the problem of too large the thickness hindering the electron transmission, thereby better ensuring the hydrophobic performance and electrical performance.

Preferably, the carbon-based layer comprises a first carbon-based layer and a second carbon-based layer sequentially from the cathode material core outward.

In the present application, it is further preferred to use two carbon-based layers to coat the cathode material core, which has better hydrophobic performance, and a resulting lithium-ion battery has better cycle performance.

Preferably, the first carbon-based layer and the second carbon-based layer each independently contain C-F bonds.

In the present application, only the first carbon-based layer or the second carbon-based layer may contain C-F bonds, or both carbon-based layers may contain C-F bonds. It is further preferred that both carbon-based layers contain C-F bonds, which has better hydrophobic performance, and a resulting lithium-ion battery has better cycle performance.

Preferably, when the first carbon-based layer contains C-F bonds, a molar ratio of F/C is 0.5 to 0.7:1, for example, the molar ratio can be 0.5:1, 0.55:1, 0.6:1, 0.65:1, or 0.7:1. 1, etc., but is not limited to the listed values, other unlisted values within this range are also applicable.

Preferably, when the second carbon-based layer contains C-F bonds, a molar ratio of F/C is 0.5 to 0.8:1, for example, the molar ratio can be 0.5:1, 0.55:1, 0.6:1, 0.65:1, 0.7: 1, 0.75:1, or 0.8:1, etc., but is not limited to the listed values. Other unlisted values within this range are also applicable.

In the present application, it is preferred that the F/C ratio in the first carbon-based layer is 0.5 to 0.7:1, as fluorine can provide better hydrophobic performance, the F/C ratio in the second carbon-based layer is 0.5 to 0.8:1, which is slightly higher than the F/C ratio in the first carbon-based layer, in this way, a better hydrophobic performance of the second carbon-based layer is ensured. Moreover, a slightly lower F/C ratio in the first carbon-based layer can avoid the impact of F in the first carbon-based layer on the electrical performance of the cathode material core.

Preferably, a thickness of the first carbon-based layer is 1 nm to 1.9 nm, for example, the thickness can be 1 nm, 1.1 nm, 1.2 nm, 1.3 nm, 1.4 nm, 1.5 nm, 1.6 nm, 1.7 nm, 1.8 nm, or 1.9 nm, etc., but not limited to the listed values, other unlisted values within this range are also applicable.

Preferably, a thickness of the second carbon-based layer is 0.1 nm to 1 nm, for example, the thickness can be 0.1 nm, 0.2 nm, 0.3 nm, 0.4 nm, 0.5 nm, 0.6 nm, 0.7 nm, 0.8 nm, 0.9 nm, or 1 nm, etc., but it is not limited to the listed values, and other unlisted values within this range are also applicable.

In the present application, it is further preferred that the thickness of the first carbon-based layer is 1 nm to 1.9 nm, the increase of the thickness during the preparation of the first carbon-based layer can ensure more uniform coating of the cathode material core and make the added oxygen-free carbon source have reduction function. Moreover, the thickness of the second carbon-based layer is smaller than that of the first carbon-based layer and controlled at 0.1 nm to 1nm, which increases the hydrophobic performance while avoiding obstruction to the electron transmission.

Preferably, the second carbon-based layer contains a metal fluoride.

In the present application, it is further preferred to add metal fluoride to the second carbon-based layer, so as to better promote the formation of C-F bonds in the second carbon-based layer, and to avoid the side reactions caused by the direct contact between the metal fluoride and the cathode material core as compared with the addition of the metal fluoride to the first carbon-based layer, moreover, the hydrophobic performance of the overall outer film layer can be further improved.

Preferably, the metal fluoride comprises any one of or a combination of at least two of: LiF, NaF, MnF₂, FeF₃, CoF₂, NiF, CuF₂, and ZnF₂, preferably LiF.

In the present application, when the metal fluoride is lithium fluoride, not only can the formation of C-F bonds be catalytically promoted, but also the Li after reaction is retained in the cathode material and can be used as a lithium-supplementing agent.

Preferably, the second carbon-based layer contains a metal salt, an elemental metal, or an intra-crystal doped metal. The present application uses the addition of metal fluoride to convert part of the fluorine into F-C bonds when forming the second carbon-based layer, such that the metal element in the metal fluoride remain in the second carbon-based layer in the form of the elemental metal, the metal salt, or the intra-crystal doped metal.

Preferably, a content of metal fluoride in the second carbon-based layer is 0.1 wt.% to 2 wt.%, for example, the content can be 0.1 wt.%, 0.2 wt.%, 0.3 wt.%, 0.5 wt.%, 0.7 wt.%, 0.8 wt.%, 1.0wt.%, 1.2 wt.%, 1.3 wt.%, 1.5 wt.%, 1.8 wt.%, or 2.0 wt.%, etc., but is not limited to the listed values, and other unlisted values within this range are also applicable.

In the present application, it is further preferred to control the content of metal fluoride in the second carbon-based layer to be within the above range, which is more conducive to ensuring the electrochemical performance of the final cathode material and improving the hydrophobic performance of the cathode material.

Preferably, a particle size of the low water content cathode material is 50 nm to 2 µm, for example, the particle size may be 50 nm, 100 nm, 200 nm, 500 nm, 600 nm, 800 nm, 1 µm, 1.2 µm, 1.5 µm, 1.8 µm, or 2 µm, but is not limited to the listed values, other non-listed values within the range are equally applicable.

Preferably, the water content of the low water content cathode material is ≤ 600 ppm, for example, the water content can be 600 ppm, 550 ppm, 500 ppm, 450 ppm, or 400 ppm, etc., but is not limited to the listed values, and other unlisted values within this range are also applicable.

Preferably, the low water content cathode material has a water content of ≤ 600 ppm after being exposed to an environment having a humidity of 75% at 35°C for 24 hrs. For example, the water content can be 600 ppm, 550 ppm, 500 ppm, 450 ppm or 400 ppm, but is not limited to the listed values, other unlisted values within this range are also applicable.

The low water content cathode material provided in the first aspect of the application can be prepared by any preparation method, and is preferably prepared by the preparation method provided in the second aspect of the present application, which has short preparation process and much lower water content of the prepared cathode material.

In a second aspect, embodiments of the present application provide a preparation method of a low water content cathode material, comprising the following steps:
(1) mixing a cathode material precursor and the first oxygen-free carbon source, and performing a first roasting under a protective atmosphere to obtain a first roasted sample; and
(2) pulverizing the first roasted sample to obtain a cathode material; or alternatively, mixing a pulverized first roasted sample and a second oxygen-free carbon source, and performing a second roasting and pulverization to obtain a cathode material.

In the present application, an oxygen-free carbon source and the cathode material precursor are selected for the first roasting to coat an outer surface of the cathode material crystal with carbon. Moreover, the oxygen-free carbon source may not introduce water-absorbing functional groups, such as hydroxyl groups and ether bonds, after the carbonization, and itself does not absorb water and thereby acts as a protective film after being coated on the crystal surface, thus reducing the water absorption of the final cathode material. When the cathode material contains iron, the oxygen-free carbon source can also reduce the ferric ions to ferrous ions during the carbon coating of the first roasting process.

In step (2), the second oxygen-free carbon source is further added to further coat the crystals with carbon. Subsequently, the second roasting is performed to form double carbon-base layers, which has a better coating effect and reduces the water absorption of the final cathode material.

In the present application, the oxygen-free carbon source is chosen as the coating carbon-based layer, and combined with the first roasting process, optionally the two-step roasting process, effective coating of the cathode material crystals by the carbon-based layer is achieved, and the final formed cathode material has low water absorption, and itself has a low water content, which greatly improves the safety and service life of lithium-ion battery products.

The cathode material mentioned in the present application refers to the cathode active material. The cathode material precursor mentioned in the present application refers to a solid-phase mixture formed according to the formulation of cathode material, but is a precursor that has not been calcined, roasted, or sintered to form cathode material crystals.

Preferably, the first oxygen-free carbon source and the second oxygen-free carbon source without modification treatment do not contain fluorine.

The present application has no special restrictions on the pulverization in the above process. Any device and method for pulverizing well known to those skilled in the art can be used, and can also be adjusted according to the actual process. For example, the pulverizing can be grinding, extrusion pulverizing, splitting pulverizing, or impact pulverizing, etc., and can also be a combination of different methods.

In the present application, it is preferred that the sieve for pulverizing and screening is controlled to 120 mesh, which can better control the particle size of the product.

The cathode material precursor is not particularly limited in the present application, and may be, for example, a cathode material precursor obtained by an autothermal evaporation liquid phase method.

Preferably, the source of the cathode material precursor in step (1) includes a cathode material precursor prepared by an autothermal evaporation liquid phase method.

In the present application, it is preferred to adopt the cathode material precursor obtained by the autothermal evaporation liquid phase method. The preparation method of this precursor is easy for industrial production, but has a higher water content in related technologies, and is more suitable for subsequent preparation using the method of the present application, such that the low water content cathode material can be obtained.

Taking lithium iron phosphate as an example, the autothermal evaporation liquid phase method includes: mixing a lithium source, an iron source, and a phosphorus source, and performing an autothermal evaporation reaction in a closed environment to obtain the cathode material precursor.

The present application has no special restrictions on the lithium source, iron source, and phosphorus source, as long as the materials commonly used by those skilled in the art that can prepare the precursor of the cathode material are used, and routine adjustments can also be made according to the actual situation. The lithium source, for example, can include any one of or a combination of at least two of: lithium hydroxide, lithium oxide, lithium hydroxide monohydrate, lithium chloride, lithium nitrite, lithium nitrate, lithium oxalate, lithium carbonate, lithium acetate, lithium phosphate, lithium dihydrogen phosphate, or dilithium hydrogen phosphate.

The iron source may include, for example, any one of or a combination of at least two of: iron oxide, iron phosphate, iron chloride, iron sulfate heptahydrate, iron sulfate, iron hydroxide, iron nitrate, iron acetate, iron citrate, iron pyrophosphate, ferrous pyrophosphate, or ferrous sulfate.

The phosphorus source may include, for example, any one or a combination of at least two of phosphoric acid, diammonium hydrogen phosphate, ammonium dihydrogen phosphate, ammonium phosphate, iron phosphate, lithium phosphate, or lithium dihydrogen phosphate.

Preferably, a solvent is added in the autothermal evaporation liquid phase method, and the solvent contains an oxidizing substance. For example, the solvent can be an oxidizing solvent directly or a combination of a non-oxidizing solvent and an oxidizing agent, which is not particularly limited. Preferably, the solvent includes an acidic solution, such as hydrochloric acid, nitric acid, phosphoric acid, nitrous acid, sulfuric acid, acetic acid, hypochlorous acid, or perchloric acid; and when the acidic solution is a non-oxidizing acid, such as, hydrochloric acid, phosphoric acid, acetic acid, or hypochlorous acid, the oxidizing agent may be, for example, hydrogen peroxide and/or ozone water.

Preferably, the cathode material in step (1) comprises any one of or a combination of at two of: lithium cobaltate, lithium nickelate, lithium manganate, lithium ferrous silicate, lithium manganese phosphate, lithium manganese iron phosphate, and lithium iron phosphate.

Lithium manganese iron phosphate (LiMnₓFe₁₋ₓPO₄) is preferred in the present application, and the value of x ranges from 0 to 0.4 and is not 0, for example, the value can be 0.01, 0.03, 0.05, 0.09, 0.14, 0.18, 0.23, 0.27, 0.32, 0.36, or 0.4, etc., but is not limited to the listed values, other unlisted values within this range are also applicable. The above values can better ensure the doping effect of manganese on lithium iron phosphate and further improve the rate performance of the cathode material itself.

Preferably, the first oxygen-free carbon source in step (1) comprises any one of or a combination of at two of: a polypropylene, a polyethylene, a gaseous paraffin, a carbon black, or a graphite. The typical but non-limiting combination is a combination of the polypropylene and the polyethylene, a combination of the gaseous paraffin and the polyethylene, a combination of the polypropylene and the gaseous paraffin, a combination of the carbon black and the polyethylene, a combination of the polypropylene and the polygraphite, preferably the carbon black and/or the graphite.

In the present application, it is preferred to use the carbon black and/or the graphite as the first oxygen-free carbon source. Compared with other carbon sources, these two only contain carbon themselves and have better hydrophobic performance after roasting.

Preferably, the first oxygen-free carbon source accounts for 3 wt.% to 5 wt.% of a mass of the cathode material precursor, for example, the mass percentage can be 3 wt.%, 3.2 wt.%, 3.4 wt.%, 3.5 wt.%, 3.8 wt.%, 4 wt.%, 4.2 wt.%, 4.5 wt.%, 4.7 wt.%, or 5 wt.%, etc., but is not limited to the listed values, and other unlisted values within this range are also applicable.

Preferably, the protective atmosphere comprises a nitrogen atmosphere.

Preferably, the first oxygen-free carbon source is modified and then mixed with the cathode material precursor.

In the present application, it is further preferred to use a modified first oxygen-free carbon source, which has better hydrophobic performance and makes the coated cathode material have lower water content.

Preferably, a temperature of the first roasting in step (1) is 400°C to 800°C, for example, the temperature can be 400°C, 450°C, 500°C, 530°C, 560°C, 600°C, 630°C, 660°C, 700°C, 730°C, 760°C, or 800°C, etc., but is not limited to the listed values, and other unlisted values within this range are also applicable.

Preferably, a first roasting time is 8 hrs to 30 hrs, for example, the time can be 8 hrs, 11 hrs, 13 hrs, 16 hrs, 18 hrs, 21 hrs, 23 hrs, 26 hrs, 28 hrs, or 30 hrs, etc., but is not limited to the listed values, and other unlisted values within this range are also applicable.

Preferably, a fluorine-containing oxygen-free carbon source is further added during the first roasting.

In the present application, it is further preferred to add a fluorine-containing oxygen-free carbon source during the first baking process to form a more hydrophobic and dense protective film and to reduce the water absorption performance of the cathode material.

Preferably, the second oxygen-free carbon source in step (2) comprises any one of or a combination of at least two of: a polypropylene, a polyethylene, a gaseous paraffin, a carbon black, and a graphite. A typical but non-limiting combination may as follows: a combination of the polypropylene and the polyethylene, a combination of gaseous paraffin and the polyethylene, a combination of the polypropylene and gaseous paraffin, a combination of the carbon black and the polyethylene, a combination of the polypropylene and the polygraphite, and preferably the carbon black and/or the graphite.

Preferably, the second oxygen-free carbon source accounts for 1 wt.% to 3 wt.% of a mass of the first roasted sample, for example, the mass percentage can be 1 wt.%, 1.2 wt.%, 1.3 wt.%, 1.5 wt.%, 1.7 wt.%, 1.8 wt.%, 2.0 wt.%, 2.2 wt.%, 2.5 wt.%, 2.8 wt.% or 3.0 wt.%, etc., but is not limited to the listed values, and other unlisted values within this range are also applicable.

Preferably, the second oxygen-free carbon source is modified and then mixed with the first roasted sample.

In the present application, it is further preferred to use a modified second oxygen-free carbon source, which has better hydrophobic performance and makes the coated cathode material have low water content.

The present application preferably adopts the method of fluorination modification of the first oxygen-free carbon source and the second oxygen-free carbon source to introduce CF, which can evenly coat the cathode material and better control the F/C molar ratio in the cathode material, such that the unfluorinated carbon atoms exist in the final cathode material, and the fluorinated carbon forms a nanostructure and is dispersed in the unfluorinated carbon atoms, which ensures rapid electron diffusion and is more conducive to improving the power density of the material, and meanwhile, makes the existence of the C-F bonds improve the hydrophobic performance of the material, and can avoid the problems of uneven coating, high fluorocarbon content, and low reactivity of CF₂ and CF₃ caused by direct addition of fluorocarbon.

Preferably, a metal fluoride is further added when mixing the first roasted sample and the second oxygen-free carbon source.

In the present application, the addition of metal fluoride is preferable. Through the second roasting, it is more conducive to the formation of C-F bonds and the hydrophobic performance is further improved.

Preferably, the metal fluoride comprises: any one of or a combination of at least two of: LiF, NaF, MnF₂, FeF₃, CoF₂, NiF, CuF₂, and ZnF₂, preferably LiF.

In the present application, it is preferred to choose LiF as a metal fluoride for the second roasting, in which, lithium fluoride can catalytically promote the formation of C-F bonds in the second roasting, and the Li after the second roasting remains in the cathode material and can be used as a lithium-supplementing agent.

Preferably, the metal fluoride accounts for 0.1 wt.% to 2 wt.% of a mass of the cathode material precursor, for example, the mass percentage can be 0.1 wt.%, 0.4 wt.%, 0.5 wt.%, 0.8 wt.%, 1.0 wt.%, 1.2 wt.%, 1.5 wt.%, 1.8 wt.%, or 2.0 wt.%, etc.

In the present application, it is further preferred that the amount of metal fluoride added is within the above range, which is more conducive to ensuring the electrochemical performance of the final cathode material and improving the hydrophobic performance of the cathode material.

Preferably, the second roasting is performed in a protective atmosphere.

Preferably, the protective atmosphere comprises a nitrogen atmosphere.

Preferably, the temperature of the first roasting is 400°C to 700°C, for example, the temperature can be 400°C, 450°C, 500°C, 520°C, 540°C, 560°C, 580°C, 610°C, 630°C, 650°C, 670°C, or 700°C, etc., but is not limited to the listed values, and other unlisted values within this range are also applicable.

Preferably, the second roasting time is 6 hrs to 12 hrs, for example, the time can be 6 hrs, 7 hrs, 8 hrs, 9 hrs, 10 hrs, 11 hrs, or 12 hrs, etc., but is not limited to the listed values, and other unlisted values within this range are also applicable.

Preferably, a fluorine-containing oxygen-free carbon source is further added during the second roasting. In the present application, it is further preferred to add a fluorine-containing oxygen-free carbon source during the first baking process to form a more hydrophobic and dense protective film and reduce the water absorption performance of the cathode material.

The present application has no special restrictions on the roasting in the above process. Any device and method that can be used for roasting well known to those skilled in the art can be used, and can also be adjusted according to the actual process. For example, the roasting can be constant temperature roasting, staged roasting, or programmed temperature roasting. etc., and can also be a combination of different methods.

Preferably, before the second roasting, the preparation method further comprises: sand grinding and spray drying a mixture of the pulverized first roasted sample and the second oxygen-free carbon source to obtain a dry sample.

In the present application, it is further added with a sand grinding and spray drying steps between the first roasting and the second roasting, which is more conducive to the effective coating of the cathode material crystals by the carbon-based layer, making the final cathode material have lower water absorption, and further improving the safety and service life of the lithium-ion battery products.

Preferably, water is added during the sand grinding.

Preferably, the water accounts for 60 wt.% to 200 wt.% of the mass of the sand-ground first roasted sample, for example, the mass percentage can be 60 wt.%, 65 wt.%, 70 wt.%, 80 wt.%, 90 wt.%, 100 wt.%, 120 wt.%, 140 wt.%, 150 wt.%, 160 wt.%, 180 wt.%, or 200 wt.%, etc., but is not limited to the listed values, and other unlisted values within this range are also applicable.

The present application has no special restrictions on the sand-ground slurry, and the slurry performance familiar to those skilled in the art can be used.

Preferably, step of modifying the first oxygen-free carbon source and step of modifying the second oxygen-free carbon source each independently comprise: mixing the first oxygen-free carbon source or the second oxygen-free carbon source with fluorine gas for fluorination reaction, and then mixing a product of the fluorination reaction with the cathode material precursor.

In the present application, the modification treatment is further preferably a fluorination reaction. CF is formed during the reaction, which improves the hydrophobic performance of the final cathode material without affecting the electrochemical performance of the cathode material.

Preferably, a temperature of the fluorination reaction is 450°C to 550°C, for example, the temperature can be 450°C, 460°C, 470°C, 480°C, 490°C, 500°C, 510°C, 520°C, 530°C, 540°C, or 550°C, etc., but is not limited to the listed values, and other unlisted values within this range are also applicable.

Preferably, a time for the fluorination reaction is 1 hr to 12 hrs, for example, it can be 1 hr, 2 hrs, 4 hrs, 5 hrs, 7 hrs, 8 hrs, 9 hrs, or 10 hrs, etc., but is not limited to the listed values, and other unlisted values within this range are also applicable.

Preferably, the product of the fluorination reaction contains CF.

Preferably, a molar ratio F:C of fluorine in the fluorine gas to carbon in the first oxygen-free carbon source or the second oxygen-free carbon source is independently 0.1 to 1:1, for example, the molar ratio can be 0.1:1, 0.2:1, 0.3:1, 0.4:1, 0.5:1, 0.6:1, 0.7:1, 0.8:1, 0.9:1, or 1:1, etc.

Preferably, the fluorine-containing oxygen-free carbon source in the first roasting and the second roasting each independently comprises any one of or a combination of at least two of: a polyvinylidene fluoride, sulfur hexafluoride, trifluoromethane, or hexafluoroethane. A typical but non-limiting combinations are the combination of polyvinylidene fluoride and sulfur hexafluoride, the combination of trifluoromethane and sulfur hexafluoride, the combination of polyvinylidene fluoride and trifluoromethane, hexafluoroethane and sulfur hexafluoride.

Preferably, the fluorine-containing oxygen-free carbon source accounts for 1 wt.% to 3 wt.% of a mass of the cathode material precursor or a mass of the first roasted sample, for example, the mass percentage can be 1 wt.%, 1.2 wt.%, 1.5 wt.%, 1.8 wt.%, 2.0 wt.%, 2.2 wt.%, 2.3 wt.%, 2.5 wt.%, 2.8 wt.%, or 3.0 wt.%, etc.

Preferably, the fluorine-containing oxygen-free carbon source is sprayed in the form of atomization or gas, and is coated on the cathode material precursor or the first roasted sample through chemical vapor deposition. It is further preferred to adopt the chemical vapor deposition to realize the coating, thereby increasing the density of the coating layer and reducing the possibility of water absorption.

In a third aspect, embodiments of the present application provide a lithium-ion battery, which includes the low water content cathode material as described in the first aspect.

Since the lithium-ion battery described in the present application contains the low water content cathode material described in the first aspect, it can be avoid the situation where water diffuses into the lithium salt in the electrolyte and reacts to produce extremely corrosive HF, resulting damages in the battery structure.

The present application has no special restrictions on the negative electrode materials, electrolytes, and current collectors in the above-mentioned lithium-ion batteries. Any anode materials, electrolytes, and current collectors that are well known to those skilled in the art to be applicable in lithium-ion batteries can be used, and can also be adjusted according to the actual process.

Compared with related technologies, the embodiments of the present application at least have the following beneficial effects:
(1) The process flow of the preparation method for the low water content cathode material provided by the embodiments of the present application is easy to control and is conducive to the realization of industrial production;
(2) The low water content cathode material provided in the embodiments of the present application is coated with a carbon film without hydroxyl and ether bonds at the outer surface, does not absorb water itself, has the water content of ≤ 600 ppm, preferably smaller than 260 ppm, and still has a water content of ≤ 600 ppm, preferably smaller than 320 ppm, after being exposed to an environment having a humidity of 75% at 35°C for 24 hrs.
(3) Based on the introduction of an oxygen-free carbon source to reduce the water absorption of the material, the low water content cathode material provided in the embodiments of the present application further preferably adopts any one or a combination of at least two of the addition of fluorine-containing oxygen-free carbon source, fluorinated treatment of the oxygen-free carbon source, and the addition of a metal fluoride, which makes the carbon-based layer have C-F bonds, further improving the hydrophobic performance of the cathode material. The water content of the cathode material before exposure can reach less than 96 ppm, and the water content of the cathode material after exposure in an environment having a humidity of 75% at 35°C for 24 hrs can reach less than 107 ppm, the corresponding lithium battery can maintain a capacity retention rate of more than 99.9% after 50 cycles at 0.1C.
(4) The lithium-ion battery provided by the embodiments of the present application reduces the possibility of water diffusing into the electrolyte in the low water content cathode material, and reduces the corrosive effect of hydrogen fluoride on the battery.

Other aspects will be apparent after reading and understanding the drawings and detailed description.

### BRIEF DESCRIPITON OF THE DRAWINGS

The accompanying drawings are used to provide a further understanding of the technical solutions herein, and constitute a part of the specification, and used to explain the technical solutions herein together with the embodiments of the present application, but do not constitute a limitation of the technical solutions herein.

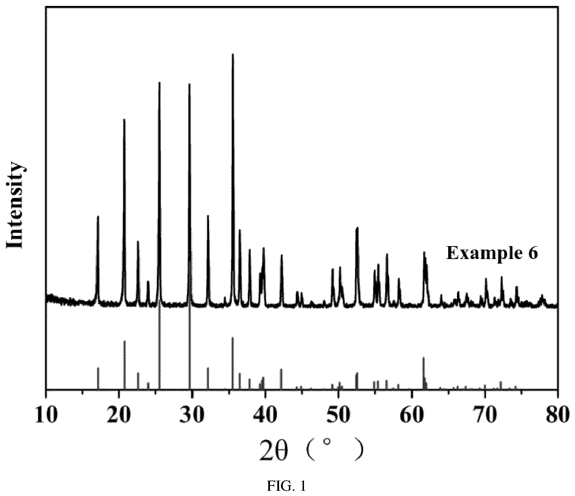

FIG. 1 is an XRD characterization spectrum of A LiMn_{0.02}Fe_{0.98}PO₄ cathode material prepared in Example 6 of the present application.

### DETAILED DESCRIPTION OF THE EMBODIMENTS

Technical solutions of the present application will be further described below with reference to the accompanying drawings through specific implementation methods.

The present application is described in further detail below. However, the following examples are only simple examples of the present application and do not represent or limit the scope of protection of the present application. The scope of protection of the present application shall be determined by the claims.

### Example 1

This example provided a method for preparing a cathode material. The preparation method was performed by the following steps:
(1) 181.88 g of Li₂CO₃, 385.21 g of Fe₂O₃, 1000 g of (NH₄)₃PO₄, 8.56 g of MnO₂, and 120 g of a 35 wt.% hydrochloric acid were collected and mixed evenly, an air pressure and a reaction temperature were monitored in a high-pressure sealed environment. The air pressure was released when raising to 0.25 MPa, and when the solvent in the system completely evaporated naturally, the autothermal evaporation reaction was completed, and a LiMn_{0.02}Fe_{0.98}PO₄ precursor was obtained;
   1575.65 g of the LiMn_{0.02}Fe_{0.98}PO₄ precursor and 47.27 g of a polyethylene (molecular weight: 10000) were mixed, and performed with a first roasting at 500°C for 12 hrs under a nitrogen atmosphere to obtain a first roasted sample;
(2) The first roasted sample was pulverized and screened by a 120-mesh screen, the screened first roasted sample and 15.76 g of the polyethylene (molecular weight: 10,000) were mixed, added with water to be mixed evenly. A resulting mixture was sand ground, and then spray dried to obtain a dry sample. The dry sample was roasted at 600°C for 8 hrs in the nitrogen atmosphere. After the sample was pulverized and screened by the 120-mesh screen, the LiMn_{0.02}Fe_{0.98}PO₄ cathode material was obtained.

### Example 2

This example provided a method for preparing a cathode material. The preparation method was performed by the following steps:
(1) 24.44 g of LiOH, 204.01 g of Fe₂(SO₄)₃, 100 g of H₃PO₄, and 120 g of a 45 wt.% hydrochloric acid were collected and mixed evenly, an air pressure and a reaction temperature were monitored in a high-pressure sealed environment. The air pressure was released when raising to 0.25 MPa, and when the solvent in the system completely evaporated naturally, the autothermal evaporation reaction was completed, and a LiFePO₄ precursor was obtained;
   328.45 g of the LiFePO₄ precursor and 9.85 g of a carbon black were mixed, and performed with a first roasting at 400°C for 8 hrs under a nitrogen atmosphere to obtain a first roasted sample;
(2) The first roasted sample was pulverized and screened by a 120-mesh screen, the screened first roasted sample and 3.28 g of a graphite were mixed, added with water to be mixed evenly. A resulting mixture was sand ground, and then spray dried to obtain a dry sample. The dry sample was roasted at 500°C for 6 hrs under a nitrogen atmosphere. After the sample was pulverized by the 120-mesh screen, the LiFePO₄ cathode material was obtained.

### Example 3

This example provided a method for preparing a cathode material. The preparation method was performed by the following steps:
(1) 52.21 g of LiNO₃, 73.69 g of FeCl₃, 100 g of (NH₄)₂HPO₄ and 157.3 g of Zr(NO₃)₂·5H₂O were collected and mixed evenly to prepare a LiZr_{0.4}Fe_{0.6}PO₄ precursor;
   293.20 g of the LiZr_{0.4}Fe_{0.6}PO₄ precursor and 19.16 g of a gaseous paraffin were mixed, specifically, under a nitrogen atmosphere, the gaseous paraffin was brought into the synthesis system by nitrogen; and the first roasting was performed at 550°C for 9 hrs. The gaseous paraffin was brought in during the whole process of continuous roasting to obtain a first roasted sample;
(2) The screened first roasted sample and 3.83 g of a polyethylene (molecular weight: 10,000) were mixed, added with water to be mixed evenly. A resulting mixture was sand ground, and then spray dried to obtain a dry sample. The dry sample was placed in a nitrogen atmosphere, roasted at 500°C for 12 hrs, and after the sample was pulverized and screened by a 120-mesh screen, the LiZr_{0.4}Fe_{0.6}PO₄ cathode material was obtained.

### Example 4

This example provided a method for preparing a cathode material. The only difference between the preparation method of this example and Example 1 was that the addition of the polyethylene and the second roasting were not performed in step (2), that is, step (2) was replaced as follows: after the first roasted sample was pulverized and screened by a 120-mesh screen, the LiMn_{0.02}Fe_{0.98}PO₄ cathode material was obtained. The XRD characterization spectrum is shown in FIG. 1. The XRD characteristic peaks are consistent with the standard characteristic peaks without impure peaks.

### Example 5

This example provided a method for preparing a cathode material. The only difference between the preparation method of this example and Example 1 was that the step (2) was replaced as follows: the first roasted sample was pulverized and screened by a 120-mesh screen, then the screened first roasted sample was mixed with 15.76 g of a polyethylene (molecular weight 10,000), a resulting mixture was roasted at 600°C for 8 hrs in a nitrogen atmosphere. After the sample was pulverized and screened by the 120-mesh screen, the LiMn_{0.02}Fe_{0.98}PO₄ cathode material was obtained.

### Example 6

This example provided a method for preparing a cathode material. The only difference between the preparation method of this example and Example 1 was that 47.27 g of a polyethylene in step (1) was replaced by 9.85 g of a carbon black, and 15.76 g of the polyethylene in step (2) was replaced by with 3.28 g of a graphite.

### Example 7

This example provided a method for preparing a cathode material. The only difference between the preparation method of this example and Example 1 was that a polyethylene in step (1) was replaced with a gaseous paraffin, that is, 17.25 g of the gaseous paraffin was brought into the synthesis system by nitrogen under a nitrogen atmosphere.

### Example 8

This example provided a method for preparing a cathode material. The only difference between the preparation method of this example and Example 4 was that the first oxygen-free carbon source (a polyethylene, molecular weight 10,000) was modified and then mixed with the cathode material precursor, in which, the mixing step was specifically performed as follows: the polyethylene and a fluorine gas was mixed for fluorination reaction at 500°C for 3 hrs, in which, a molar ratio F:C of fluorine in the fluorine gas to the carbon in the polyethylene was 0.5:1, then a resulting mixture was further mixed with the cathode material precursor.

### Example 9

This example provided a method for preparing a cathode material. The only difference between the preparation method of this example and Example 2 was that during the first roasting process, a polyvinylidene fluoride (molecular weight: 600) having a mass accounting for 1 wt.% of the mass of the cathode material precursor was further sprayed in an atomized form, so as to coat the cathode material precursor through chemical vapor deposition.

### Example 10

This example provided a method for preparing a cathode material. The only difference between the preparation method of this example and Example 9 was that during the second roasting process, hexafluoromethane having a mass accounting for 2 wt.% of a mass of the dry sample was further sprayed in an atomized form, so as to coat the dry sample through chemical vapor deposition.

### Example 11

This example provided a method for preparing a cathode material. The only difference between the preparation method of this example and Example 10 was that the first oxygen-free carbon source (a carbon black) was modified and then mixed with the cathode material precursor, the mixing process was specifically performed as follows: the carbon black and the fluorine gas were mixed for fluorination reaction at 500°C for 5 hrs, in which, a molar ratio F:C of fluorine in the fluorine gas and carbon in the carbon black was 0.76:1, and then a resulting mixture was mixed with the cathode material precursor; while the second oxygen-free carbon source (a graphite) was modified and then mixed with a first roasted sample, the mixing process was specifically performed as follows: the graphite and the fluorine gas were mixed to perform a fluorination reaction at 480°C, in which, a molar ratio F:C of fluorine and graphite in the fluorine gas and carbon in the graphite was 0.76:1, and then a resulting mixture was further mixed with the first roasted sample.

### Example 12

This example provided a method for preparing a cathode material. The only difference between the preparation method of this example and Example 1 was that in step (2), when mixing the screened first roasted sample and 15.76 g of polyethylene, LiF having a mass accounting for 1 wt.% of a mass of LiMn_{0.02}Fe_{0.98}PO₄ precursor was added.

### Example 13

This example provided a method for preparing a cathode material. The only difference between the preparation method of this example and Example 11 was that in step (2), when mixing the screened first roasted sample and the graphite, CuF₂ having a mass accounting for 0.1 wt.% of a mass of LiFePO₄ precursor was added.

### Example 14

This example provided a method for preparing a cathode material. The only difference between the preparation method of this example and Example 13 was that in step (2), when mixing the screened first roasted sample and the graphite, CuF₂ having a mass accounting for 4 wt.% of a mass of LiFePO₄ precursor was added.

### Example 15

This example provided a method for preparing a cathode material. The only difference between the preparation method of this example and Example 8 was that the molar ratio F:C of fluorine in the fluorine gas and carbon in the polyethylene was 2:1.

### Comparative Example 1

This comparative example provides a preparation method of a cathode material. The only difference between the preparation method of this example and Example 4 was that polyethylene was replaced by glucose.

### Comparative Example 2

This comparative example provided a method for preparing a cathode material. The only difference between the preparation method of this example and Example 4 was that the polyethylene was replaced by ethanol.

### Comparative Example 3

This comparative example provided a method for preparing a cathode material. The only difference between the preparation method of this example and Example 4 was that polyethylene was not added.

### Comparative Example 4

This comparative example provided a method for preparing a cathode material. The only difference between the preparation method of this example and Example 1 was that the polyethylene in steps (1) and (2) was replaced by glucose.

### Comparative Example 5

This comparative example provided a method for preparing a cathode material. The only difference between the preparation method of this example and Example 1 was that the polyethylene in steps (1) and (2) was replaced by ethanol.

Testing method: ¹³C and ¹⁹FNMR spectrum analysis methods were used to test the molar ratio F/C in the first carbon-based layer and the second carbon-based layer of the cathode materials prepared in the above examples and comparative examples, and use the TEM method was adopted to test the thicknesses of the first carbon-based layer and the second carbon-based layer. The properties of the prepared cathode material are shown in Table 1.

**Table 1**

| | Molar ratio F/C in outer film layer | | Thickness of outer film layer | | Content of metal fluoride in second carbon-base d (%) | Particle size of cathode material |
|---|---|---|---|---|---|---|
| | First carbon-base d layer | Second carbon-base d layer | First carbon-base d layer | Second carbon-base d layer | | |
| Example 1 | - | - | 1.6 nm | 0.7 nm | - | 1 µm |
| Example 2 | - | - | 1.7 nm | 0.8 nm | - | 600 nm |
| Example 3 | - | - | 1.9 nm | 0.8 nm | - | 750 nm |
| Example 4 | - | | 1.7nm | | - | 700 nm |
| Example 5 | - | - | 1.6 nm | 0.8 nm | - | 1.5 µm |
| Example 6 | - | - | 1.7 nm | 0.8 nm | - | 1 µm |
| Example 7 | - | - | 1.5 nm | 0.8 nm | - | 1 µm |
| Example 8 | 0.4:1 | | 1.8nm | | - | 800 nm |
| Example 9 | 0.2:1 | - | 1.9 nm | 0.8 nm | - | 600 nm |
| Example 10 | 0.2:1 | 0.3:1 | 1.9 nm | 1.0 nm | - | 600 nm |
| Example 11 | 0.72:1 | 0.79:1 | 1.9 nm | 1.0 nm | - | 600 nm |
| Example 12 | - | 0.5:1 | 1.6 nm | 0.7 nm | 0.20 | 1 µm |
| Example 13 | 0.72:1 | 0.8:1 | 1.9 nm | 1.0 nm | 0.02 | 600 nm |
| Example 14 | 0.72:1 | 1.43:1 | 1.9 nm | 1.0 nm | 0.70 | 600 nm |
| Example 15 | 1.5:1 | | 1.8 nm | | - | 800 nm |
| Comparativ e Example 1 | - | | 1.9 nm | | - | 800 nm |
| Comparativ e Example 2 | - | | 1.7 nm | | - | 800 nm |
| Comparativ e Example 3 | - | | - | | - | 800 nm |
| Comparativ e Example 4 | - | - | 1.8 nm | 0.8 nm | - | 1 µm |
| Comparativ e Example 5 | - | - | 1.7 nm | 0.6 nm | - | 1 µm |

| | | | | | | |
|---|---|---|---|---|---|---|
| "-" in Table 1 indicates that no such data are provided. | | | | | | |

The water content of the above-mentioned cathode materials was measured with a Karl Fischer water tester, and the water content of the cathode materials was tested after being exposed to an environment having a humidity of 75% at 35°C for 24 hrs. The results are shown in Table 2.

**Table 2**

| | Water content of cathode material before being exposed (ppm) | Water content of cathode material after being exposed for 24 hrs (ppm) |
|---|---|---|
| Example 1 | 231 | 263 |
| Example 2 | 162 | 170 |
| Example 3 | 255 | 311 |
| Example 4 | 420 | 546 |
| Example 5 | 260 | 337 |
| Example 6 | 164 | 175 |
| Example 7 | 252 | 310 |
| Example 8 | 386 | 479 |
| Example 9 | 151 | 164 |
| Example 10 | 135 | 143 |
| Example 11 | 96 | 107 |
| Example 12 | 210 | 259 |
| Example 13 | 90 | 102 |
| Example 14 | 88 | 97 |
| Example 15 | 85 | 92 |
| Comparative Example 1 | 728 | 1251 |
| Comparative Example 2 | 680 | 951 |
| Comparative Example 3 | 642 | 861 |
| Comparative Example 4 | 1027 | 2819 |
| Comparative Example 5 | 746 | 1842 |

The following points can be seen from Table 1 and Table 2:
(1) From a combination of Examples 1-3, it can be seen that not only was the preparation method of the cathode material provided in the present application suitable for preparing different series of cathode active materials, in which at least one carbon-based layer was coated outside the cathode material core, but also the obtained cathode material has low water content and low water absorption performance, in which, the water content of the cathode material before exposure was ≤ 300 ppm, and the water content of the cathode material after being exposed in the environment having the humidity of 75% at 35°C for 24 hrs was ≤ 400 ppm.
(2) From a combination of Example 1 and Examples 4-5, it can be known that in Example 1, a combined process of the second roasting and one sand grinding was used, compared with Example 4 adopting only one roasting and Example 5 excluding any sand grinding and spray drying, the cathode active material of Example 1 contained double carbon-based layers, a water content thereof before exposure was only 231 ppm, and a water content of the cathode material after being exposed in the environment having the humidity of 75% at 35°C for 24 hrs was only 263 ppm; in contrast, Example 4 only contained a carbon-based layer, and the particle size of cathode material in Example 5 reached 1.5 µm and relatively increased, finally the water contents of the Examples 4-5 before exposure were as high as 420 ppm and 260 ppm, respectively, and the water contents of the cathode material after exposure in the environment having the humidity of 75% at 35°C for 24 hrs were as high as 546 ppm and 337 ppm, respectively. In view of this, it was shown that the present application adopted an oxygen-free carbon source and further combined the second roasting and one sand grinding process, such that the formed outer film layer was in a structure of double carbon-based layers, and a cathode material having lower water content and water absorption was obtained.
(3) From a combination of Example 1 and Examples 6-7, it can be seen that the combination of the carbon black and the graphite selected as the oxygen-free carbon source had a better effect on the hydrophobic performance of the cathode material than the combination of the polyethylene and the polyethylene, the product had lower water content and water adsorption properties; while the combination of the polyethylene and the polyethylene, when compared with the combination of the gaseous paraffin and the polyethylene, the combination of the carbon black and the graphite, and the combination of the polyethylene and the polyethylene, had relatively reduced hydrophobic performance and improved water adsorption performance. This showed that the present application can further optimize the oxygen-free carbon source and further reduce the water content and water adsorption performance of the cathode material.
(4) From a combination of Example 4, Example 8, Example 10, and Example 11, it can be seen that in both Example 8 and Example 11, the oxygen-free carbon source was modified. Compared with Example 4 and Example 10, in which, the oxygen-free carbon source was not modified, the outer film layer of Example 8 contained C-F bonds and had a F/C ratio to be 0.4:1, and the water contents thereof before and after exposure were lower than those of Example 4, the double carbon-based layers of Example 11 all contained C-F bonds, and the water contents before and after exposure were lower than those of Example 10. This showed that in the present application, CF was partially introduced to the cathode active material, preferably the oxygen-free carbon sources, which improved the hydrophobic performance and reduced the water content.
(5) From a combination of Example 2 and Examples 9-10, it can be seen that in Example 2, no fluorine-containing oxygen-free carbon source was added to the first roasting and the second roasting; in Example 9, only the first roasting was added with the fluorine-containing oxygen-free carbon source; and in Example 10, the fluorine-containing oxygen-free carbon source was added to both the first roasting and second roasting. The results showed that only the first carbon-based layer of Example 9 contained CF, while both the first carbon-based layer and the second carbon-based layer contained CF in Example 10. The hydrophobic performance of the cathode material in Example 10 was better than that in Example 9 and better than that in Example 2. This showed that in the application the fluorine-containing oxygen-free carbon source was preferably added to the first rotating and the second rotating step by step, such that both the double carbon-based layers contained the CF, which can further reduce the water content in the cathode material and improve the hydrophobic performance.
(6) From a combination of Example 12 and Example 1, it can be seen that Example 12 was based on Example 1 and was further added with lithium fluoride during the second roasting, and the second carbon-based layer in the prepared cathode material was introduced with CF and fluorine, such that the product not only had better hydrophobic performance, but also had lower water content and water adsorption performance, in which, the water content reduced from 231 ppm and 263 ppm before and after the exposure in Example 1 to 210 ppm and 259 ppm respectively. Moreover, lithium fluoride can be used as a lithium-supplementing agent, thus improving the electrical conductivity of the material, which was increased from 4.2×10⁴ S/cm in Example 1 to 8.9×10⁻³ S/cm, indicating that the present application can promote the formation of C-F bonds to a certain extent by preferably adopting the metal fluoride as the catalyst and can improve the performance of the cathode material. Comparing Example 13 with Example 11, it showed that the formation of C-F was preferably catalyzed by the metal fluoride, and the hydrophobic performance of the cathode material was better.
(7) From a combination of Example 4 and Comparative Examples 1-3, it can be seen that in Example 4, the polyethylene was used as an oxygen-free carbon source. Compared with Comparative Examples 1-3 where addition of glucose, addition of ethanol, and no addition of carbon source were respectively adopted, the water content before exposure in Comparative Examples 1-3 was much higher than that in Example 4, and the water content after 24 hrs of exposure in Comparative Examples 1-3 was significantly increased to more than 800 ppm. Example 1 and Comparative Examples 4-5 also had similar situations. This showed that by selecting oxygen-free carbon sources in the present application, the water content of the cathode material was significantly reduced and the water adsorption capacity thereof was also reduced.

### Application Example 1

The present application example provided a button-type lithium-ion battery. The cathode active component of the button-type lithium-ion battery adopted the cathode material provided in Example 1. The specific preparation method was performed by the following steps:

800 g of a nanoscale LiMn_{0.03}Fe_{0.97}PO₄ as a cathode material, 100 g of an acetylene black as a conductive agent, and 100 g of a polyvinylidene fluoride (PVDF) as a binder were added to 800 g of an N-methylpyrrolidone solution (NMP solution), stirred in a vacuum mixer for 2 hrs to prepare a cathode slurry. The cathode slurry was applied evenly on an aluminum foil, which was then placed in a vacuum drying oven for drying at 120°C for 12 hrs, then rolled and punched into a disc having a diameter of 14 mm as a cathode plates. The cathode plate, an anode plate (lithium metal plate having a diameter of 14.5 mm), a separator (Celgard2400 microporous polypropylene membrane), and an electrolyte (1 mol/L LiPF6/EC+DMC (volume ratio 1:1) were assembled into a CR2025 button lithium-ion battery in a glove box filled with hydrogen.

Charge and discharge test: the prepared test battery in Application Example 1 was performed with a charge and discharge test using a lithium-ion battery charge and discharge test system at 25±0.5°C. The charge and discharge conditions were as follows: charge termination voltage 3.75 V; discharge termination voltage 2.00 V; charge and discharge current density: 0.1 C, 1 C, in which, the 0.1C discharge capacity was 159.00 mAh/g and the 1 C discharge capacity was 149.60 mAh/g.

Cycle performance test: the test battery was subjected to 50 cycles at 0.1 C, and a discharge capacity after 50 cycles was tested.

### Application Examples 2-15

Application Examples 2-15 provide a button-type lithium-ion battery. The button-type lithium-ion battery was the same as Application Example 1 except that the cathode active component was made of the cathode material in Examples 2-15, respectively. The test conditions were the same as those in Application Example 1.

### Application Comparative Examples 1 to 5

Application Comparative Examples 1 to 5 provide a button-type lithium-ion battery. The button-type lithium-ion battery was the same as Application Example 1 except that the cathode active component was made of the cathode material in Application Comparative Examples 1 to 5 respectively. The test conditions were also the same as Application Example 1.

The above test results are shown in Table 3.

**Table 3**

| | 0.1 C discharge capacity (mAh/g) | 1 C discharge capacity (mAh/g) | Discharge capacity after 50 cycles at 0.1 C (mAh/g) | Capacity retention rate (%) |
|---|---|---|---|---|
| Application Example 1 | 158.4 | 145.1 | 157.9 | 99.68 |
| Application Example 2 | 152.3 | 152.6 | 152.0 | 99.80 |
| Application Example 3 | 158.9 | 147.3 | 158.1 | 99.50 |
| Application Example 4 | 159.8 | 151.5 | 158.5 | 99.19 |
| Application Example 5 | 156.4 | 140.1 | *155.5* | 99.42 |
| Application Example 6 | 158.6 | 145.9 | 158.4 | 99.87 |
| Application Example 7 | 158.0 | 142.8 | 157.3 | 99.56 |
| Application Example 8 | 159.2 | 150.5 | 158.5 | 99.56 |
| Application Example 9 | 154.5 | 152.4 | 154.3 | 99.87 |
| Application Example 10 | 154.8 | 153.3 | 154.6 | 99.87 |
| Application Example 11 | 155.1 | 153.6 | 155.0 | 99.94 |
| Application Example 12 | 158.9 | 150.2 | 158.4 | 99.69 |
| Application Example 13 | 155.2 | 153.8 | 155.1 | 99.94 |
| Application Example 14 | 153.5 | 151.1 | 153.5 | 100 |
| Application Example 15 | 157.1 | 149.2 | 156.8 | 99.81 |
| Application Comparative Example 1 | 158.7 | 147.0 | 155.6 | 98.05 |
| Application Comparative Example 2 | 150.2 | 134.0 | 147.3 | 98.07 |
| Application Comparative Example 3 | 61.5 | 20.8 | 41.2 | 66.99 |
| Application Comparative Example 4 | 158.0 | 141.3 | 153.5 | 97.15 |
| Application Comparative Example 5 | 148.7 | 130.8 | 145.0 | 97.51 |

The following points can be referred to from Table 2:
(1) From a combination of application examples 1-3, it can be seen that the lithium-ion battery prepared from the low water content cathode material provided by the present application had excellent discharge performance and cycle stability, in which, a 0.1 C discharge capacity was above 152.3 mAh/g, preferably, above 158 mAh/g; a 1 C discharge capacity was above 145.1 mAh/g, preferably above 145 mAh/g; and a capacity retention rate after 50 cycles at 0.1 C reached more than 99%, or even more than 99.8%.
(2) From a combination of Application Example 1 and Application Examples 4-5, it can be known that in Application Example 1, a combined process of the second roasting and one sand grinding was used. Compared with Example 4 adopting only one roasting and Example 5 excluding any sand grinding and spray drying, the cathode active material of Example 1 contained double carbon-based layers, and the capacity retention rate of the prepared lithium-ion battery after 50 cycles at 0.1C was 99.68%; in contrast, Example 4 only contained a carbon-based layer, and the particle size of cathode material in Example 5 reached 1.5 µm and relatively increased. As a result, in Application Examples 4-5, the capacity retention rates after 50 cycles at 0.1 C were only 99.19% and 99.42% respectively. In view of this, it was shown that the present application adopted an oxygen-free carbon source and further combined the second roasting and one sand grinding process, such that the formed outer film layer was in a structure of double carbon-based layers, and a cathode material having better cycle performance was obtained.
(3) From a combination of Application Example 1 and Application Examples 6-7, it can be seen that the combination of the carbon black and the graphite was selected as the oxygen-free carbon source in Application Example 6, compared with the combination of polyethylene and polyethylene in Application Example 1 as well as the combination of the gaseous paraffin and the polyethylene in Application Example 7, the capacity retention rate after 50 cycles at 0.1C in Application Example 6 was as high as 99.87%, while in Application Example 1 and Application Example 7, the data dropped to 99.68% and 99.56% respectively, which showed that the preferred combination of oxygen-free carbon sources had better cycle stability.
(4) From a combination of Application Examples 4 and 8, as well as Application Examples 10 and 11, it can be seen that in Application Examples 8 and 11, the oxygen-free carbon source was modified. Compared with Application Examples 4 and 10, in which, the oxygen-free carbon source was not modified, the outer film layer of Examples 8 and 11 contained C-F bonds, which further improved the cycle stability on the basis of the originally excellent cycle stability. This showed that in the present application, CF was preferably partially introduced into the oxygen-free carbon sources, and the capacity retention rate of the final battery can still be further improved after 50 cycles at 0.1 C; however, when Application Example 15 was based on Application Example 8 and the ratio of fluorine gas to polyethylene was further increased, the molar ratio F/C in the carbon-based layer was as high as 1.5:1, but the discharge capacity decreased. This showed that the molar ratio F/C in the carbon-based layer in the application was preferably controlled within a specific range, so as to better balance the discharge performance and the hydrophobic performance.
(5) From a combination of Application Example 2 and Application Examples 9-10, it can be seen that in Application Example 2, no fluorine-containing oxygen-free carbon source was added to the first roasting and the second roasting, and in Application Example 9, only the first roasting was added with the fluorine-containing oxygen-free carbon source; and in Application Example 10, the fluorine-containing oxygen-free carbon source was added to both the first roasting and second roasting. The results showed that the capacity retention rates of Application Examples 2, 9, and 10 were 99.80%, 99.87%, and 99.87%, respectively, indicating that even if the original capacity retention rate reached more than 99.8%, the capacity retention rate of the double carbon-based layers both containing CF in the present application was better than that of only one carbon-based layer containing CF, and both cathode materials had further improved capacity retention rate conditions compared with the cathode material not containing CF.
(6) From a combination of the comparison between Application Example 12 and Application Example 1, as well as the comparison between Application Example 13 and Application Example 11, it was known that the metal fluoride serving as a catalyst enabled the oxygen-free carbon source to form the C-F bonds, which reduced the water adsorption of the material and further improved the discharge performance and cycle stability of the cathode material; moreover, from the comparison between Application Example 13 and Application Example 14, it can be seen that the addition amount of CuF₂ in Application Example 14 was 4 wt.%, resulting in the final F/C ratio of the second carbon-based layer being as high as 1.43 :1, and the discharge capacity of Application Example 14 was decreased compared with Application Example 13, which showed that the addition amount of metal fluoride in the present application required to be controlled within a specific range, so as to ensure both hydrophobic performance and discharge performance.
(7) From a combination of Application Example 4 and Application Comparative Examples 1-3, it can be seen that the polyethylene was used as the oxygen-free carbon source in Application Example 4. Compared with Application Comparative Examples 1-3, where addition of glucose, addition of ethanol, and no addition of carbon source were respectively adopted, the capacity retention rates after 50 cycles at 0.1C in Comparative Examples 1-3 were only 98.05%, 98.07%, and 66.99%, respectively. In Application Example 4, the cycle stability was significantly better; Application Example 1 and Application Comparative Examples 4-5 also had similar situations, which showed that by selecting oxygen-free carbon sources in the present application, the corrosion of cathode material during recycling was reduced and the cycle stability of lithium-ion battery was improved.

The above embodiments of the present application illustrate the detailed structural features of the present application, but the present application is not limited to the above detailed structural features, that is, it does not mean that the present application must rely on the above detailed structural features to be implemented. Those skilled in the art should understand that any improvements to the present application, equivalent replacements of the components selected in the present application, addition of auxiliary components, selection of specific methods, etc., all fall within the protection scope and disclosure scope of the present application.

## Claims

1. A low water content cathode material, the cathode material comprising: a cathode material core, and an outer film layer being coated outside the cathode material core, wherein the outer film layer comprises at least one carbon-based layer formed from an oxygen-free carbon source.

2. The low water content cathode material according to claim 1, wherein the cathode material core comprises any one of or a combination of at least two of: lithium cobaltate, lithium nickelate, lithium manganate, lithium ferrous silicate, lithium manganese phosphate, lithium manganese iron phosphate, and lithium iron phosphate.

3. The low water content cathode material according to claim 1 or 2, wherein the carbon-based layer contains C-F bonds.

4. The low water content cathode material according to any one of claims 1-3, wherein a molar ratio of F/C in the carbon-based layer is 0.5 to 0.8:1.

5. The low water content cathode material according to any one of claims 1-4, wherein a thickness of the carbon-based layer is 2 nm to 3 nm;
preferably, the carbon-based layer comprises a first carbon-based layer and a second carbon-based layer sequentially from the cathode material core outward;
preferably, the first carbon-based layer and the second carbon-based layer each independently contain C-F bonds;
preferably, when the first carbon-based layer contains C-F bonds, a molar ratio of F/C is 0.5 to 0.7:1;
preferably, when the second carbon-based layer contains C-F bonds, a molar ratio of F/C is 0.5 to 0.8:1;
preferably, a thickness of the first carbon-based layer is 1 nm to 1.9 nm;
preferably, a thickness of the second carbon-based layer is 0.1 nm to 1 nm;
preferably, the second carbon-based layer contains a metal fluoride;
preferably, the metal fluoride comprises any one of or a combination of at least two of: LiF, NaF, MnF₂, FeF₃, CoF₂, NiF, CuF₂, and ZnF₂; and
preferably, a content of metal fluoride in the second carbon-based layer is 0.1 wt.% to 2 wt.%.

6. The low water content cathode material according to any one of claims 1-5, wherein a particle size of the low water content cathode material is 50 nm to 2 µm;
preferably, the water content of the low water content cathode material is ≤ 600 ppm;
preferably, the low water content cathode material has a water content of ≤ 600 ppm after being exposed to an environment having a humidity of 75% at 35°C for 24 hrs.

7. A preparation method of a low water content cathode material, comprising the following steps:
(1) mixing a cathode material precursor and the first oxygen-free carbon source, and performing a first roasting under a protective atmosphere to obtain a first roasted sample; and
(2) pulverizing the first roasted sample to obtain a cathode material; or alternatively, mixing a pulverized first roasted sample and a second oxygen-free carbon source, and performing a second roasting and pulverization to obtain a cathode material.

8. The preparation method according to claim 7, wherein the cathode material in step (1) comprises any one of or a combination of at two of: lithium cobaltate, lithium nickelate, lithium manganate, lithium ferrous silicate, lithium manganese phosphate, lithium manganese iron phosphate, and lithium iron phosphate.

9. The preparation method according to claim 7 or 8, wherein the first oxygen-free carbon source in step (1) comprises any one of or a combination of at two of: a polypropylene, a polyethylene, a gaseous paraffin, a carbon black, or a graphite.

10. The preparation method according to any one of claims 7 to 9, wherein the first oxygen-free carbon source accounts for 3 wt.% to 5 wt.% of a mass of the cathode material precursor.

11. The preparation method according to any one of claims 7-10, wherein the protective atmosphere comprises a nitrogen atmosphere;
preferably, the first oxygen-free carbon source is modified and then mixed with the cathode material precursor;
preferably, a temperature of the first roasting in step (1) is 400°C to 800°C;
preferably, a first roasting time is 8 hrs to 30 hrs;
preferably, a fluorine-containing oxygen-free carbon source is further added during the first roasting.

12. The preparation method according to any one of claims 7-11, wherein the second oxygen-free carbon source in step (2) comprises any one of or a combination of at least two of: a polypropylene, a polyethylene, a gaseous paraffin, a carbon black, and a graphite;
preferably, the second oxygen-free carbon source accounts for 1 wt.% to 3 wt.% of a mass of the first roasted sample;
preferably, the second oxygen-free carbon source is modified and then mixed with the first roasted sample;
preferably, a metal fluoride is further added when mixing the first roasted sample and the second oxygen-free carbon source;
preferably, the metal fluoride comprises: any one of or a combination of at least two of: LiF, NaF, MnF₂, FeF₃, CoF₂, NiF, CuF₂, and ZnF₂;
preferably, the metal fluoride accounts for 0.1 wt.% to 2 wt.% of a mass of the cathode material precursor;
preferably, the second roasting is performed in a protective atmosphere;
preferably, the protective atmosphere comprises a nitrogen atmosphere;
preferably, the temperature of the first roasting is 400°C to 700°C;
preferably, the second roasting time is 6 hrs to 12 hrs;
preferably, a fluorine-containing oxygen-free carbon source is further added during the second roasting;
preferably, before the second roasting, the preparation method further comprises: sand grinding and spray drying a mixture of the pulverized first roasted sample and the second oxygen-free carbon source to obtain a dry sample;
preferably, water is added during the sand grinding.

13. The preparation method according to claims 9-12, wherein step of modifying the first oxygen-free carbon source and step of modifying the second oxygen-free carbon source each independently comprise: mixing the first oxygen-free carbon source or the second oxygen-free carbon source with fluorine gas for fluorination reaction, and then mixing a product of the fluorination reaction with the cathode material precursor;
preferably, a temperature of the fluorination reaction is 450°C to 550°C;
preferably, a time for the fluorination reaction is 1 hr to 12 hrs;
preferably, the product of the fluorination reaction contains CF;
preferably, a molar ratio F:C of fluorine in the fluorine gas to carbon in the first oxygen-free carbon source or the second oxygen-free carbon source is independently 0.1 to 1:1;
preferably, the fluorine-containing oxygen-free carbon source in the first roasting and the second roasting each independently comprises any one of or a combination of at least two of: a polyvinylidene fluoride, sulfur hexafluoride, trifluoromethane, or hexafluoroethane;
preferably, the fluorine-containing oxygen-free carbon source accounts for 1 wt.% to 3 wt.% of a mass of the cathode material precursor or a mass of the first roasted sample; and
preferably, the fluorine-containing oxygen-free carbon source is sprayed in the form of atomization or gas, and is coated on the cathode material precursor or the first roasted sample through chemical vapor deposition.

14. A lithium-ion battery, comprising the low water content cathode material according to any one of claims 1-6.
